# EUROPEAN PATENT SPECIFICATION

(11) **EP 3 514 468 B1**
(45) Date of publication and mention of the grant of the patent: **21.04.2021**
(21) Application number: 19152383.6
(22) Date of filing: 17.01.2019
(51) Int. Cl.: F28D 7/16, F28F 9/02, F02C 7/141, F02C 7/18, B33Y 80/00, B22F 3/105, B22F 3/00

(54) **GAS TURBINE ENGINE COMRPSISING A HYBRID ADDITIVE MANUFACTURED HEAT EXCHANGER WITH TUBES**
HYBRIDER GENERATIV GEFERTIGTER WÄRMETAUSCHER MIT ROHREN EINER GASTURBIBETRIEBWERK
MATEUR DE TURBINE A GAZ COMPRENANT UN ÉCHANGEUR DE CHALEUR HYBRIDE DE FABRICATION ADDITIVE DOTÉ DE TUBES

(30) Priority: 18.01.2018 US 201815874488
(43) Date of publication of application: 24.07.2019
(73) Proprietor: Raytheon Technologies Corporation, Farmington, CT 06032 (US)
(72) Inventor: TWELVES, Wendell V., Glastonbury, CT 06033 (US); FURRER, David U., Marlborough, CT 06447 (US); ALFORD, William E., Tolland, CT 06084 (US)
(74) Representative: Dehns

(56) References cited:
- EP-A2- 0 191 602
- EP-A2- 2 636 982
- WO-A1-2015/109102
- US-A1- 2012 211 158

## Description

### BACKGROUND

In some applications, various operational requirements may impose challenges in terms of a design and manufacture of heat exchangers. For example, a gas turbine engine application may require a heat exchanger to be operative in connection with elevated pressures and elevated temperatures (on an absolute or differential basis), while still performing at high efficiency. Such requirements may demand a reduced (e.g., minimal) wall thickness to reduce (e.g., minimize) thermal resistance between a first (e.g., hot) fluid and a second (e.g., cold) fluid. Also, mechanical properties may need to be controlled/regulated to accommodate stress imposed by high pressure and transient thermal gradients.

Metal additive manufacturing processes using a layer-by-layer deposition process nominally produce a relatively rough surface finish (e.g., Ra150 to Ra1000) depending on the specific process and surface orientation. In addition, building thin walls (e.g., walls on the order of 0.001 inches to 0.004 inches (approximately 25 micrometers to 102 micrometers)) with consistently good mechanical properties is difficult. Powder and wire fed metal additive manufacturing processes typically have a lower practical wall thickness limit in a range of 0.008 inches to 0.020 inches (approximately 203 micrometers to 508 micrometers) due to process limitations. Porosity, irregular wall thickness, poor surface finish, large grain size, and build anomalies become more common in metal additive manufacturing grown components as the wall thickness approaches reduced (e.g., minimum) values.

Prior art includes EP 0 191 602 A2 Microtube strip (MTS) heat exchanger, WO 2015/109102 A1 An additive manufacturing system utilizing an epitaxy process and method of operation, US 2012/211158 A1 Method for manufacturing a micro tube heat exchanger and EP 2 636 982 A2 Tubular heat exchange systems.

Accordingly, what is needed is practical, low cost techniques for designing and manufacturing heat exchangers with thin walls and quality/robust mechanical properties.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

Aspects of the invention are directed to a gas turbine engine as claimed in claim 1.

Aspects of the invention are directed to a method of fabricating a heat exchanger of a gas turbine as claimed in claim 15.

### BRIEF DESCRIPTION OF THE DRAWINGS

The present disclosure is illustrated by way of example and not limited in the accompanying figures in which like reference numerals indicate similar elements. The figures are not necessarily drawn to scale unless explicitly indicated otherwise.
FIG. 1 is a side cutaway illustration of a gas turbine engine.
FIG. 2 illustrates a heat exchanger in accordance with aspects of this disclosure.
FIG. 2A illustrates a manifold of the heat exchanger of FIG. 2.
FIG. 2B illustrates a profile of a hypotube in accordance with aspects of this disclosure.
FIG. 3 illustrates an array of bosses included with the heat exchanger of FIG. 2.
FIG. 3A illustrates the bosses of FIG. 3 in accordance with a first embodiment.
FIG. 3B illustrates the bosses of FIG. 3 in accordance with a second embodiment.
FIG. 4 illustrates a partially exploded view of the heat exchanger of FIG. 2 that incorporates a step/ridge to facilitate a brazed lap joint.
FIG. 5 illustrates the heat exchanger of FIG. 2, where a tube of the heat exchanger incorporates a strain relief/compliance feature.
FIG. 6 illustrates a flow chart of a method for manufacturing a heat exchanger in accordance with aspects of this disclosure.

### DETAILED DESCRIPTION

It is noted that various connections are set forth between elements in the following description and in the drawings (the contents of which are included in this disclosure by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities.

Aspects of the disclosure are directed to a heat exchanger of a gas turbine engine. The heat exchanger may be manufactured by using one or more manufacturing techniques. For example, a heat exchanger may be manufactured with one or more additive manufacturing grown manifolds and associated structure in combination with thin walled tubes (e.g., hypotubes). Tubes of this disclosure may be characterized by a quality surface finish and wrought or near-wrought mechanical properties. The use of additive manufacturing may enable/provide braze bosses for a tube-to-manifold wall joint to be locally grown on relatively thin manifold walls, enabling a reduction (e.g., minimization) in terms of weight while also providing high performance braze bond joints between the tubes and the manifold(s). The heat exchanger may include one or more materials (e.g., metals). For example, the heat exchanger may include copper, aluminum, stainless steel, or refractory nickel superalloys. The material(s) of the heat exchanger may enable the heat exchanger to reliably operate in elevated temperature and/or elevated pressure applications.

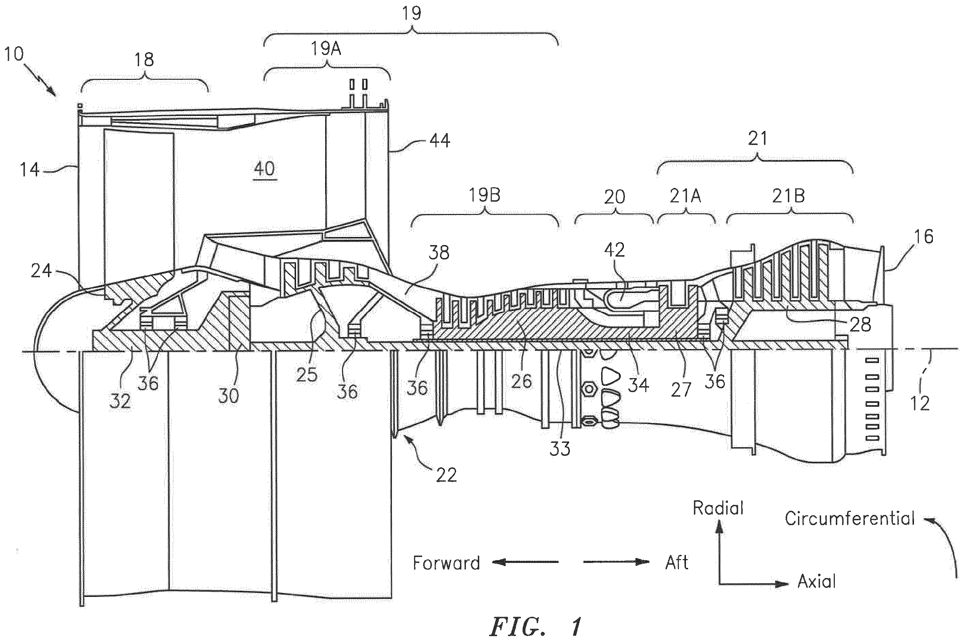

FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36 (e.g., rolling element and/or thrust bearings). Each of these bearings 36 is connected to the engine housing 22 by at least one stationary structure such as, for example, an annular support strut.

As one skilled in the art would appreciate, in some embodiments a fan drive gear system (FDGS), which may be incorporated as part of the gear train 30, may be used to separate the rotation of the fan rotor 24 from the rotation of the rotor 25 of the low pressure compressor section 19A and the rotor 28 of the low pressure turbine section 21B. For example, such an FDGS may allow the fan rotor 24 to rotate at a different (e.g., slower) speed relative to the rotors 25 and 28.

During operation, air enters the turbine engine 10 through the airflow inlet 14, and is directed through the fan section 18 and into a core gas path/duct 38 and a bypass gas path/duct 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

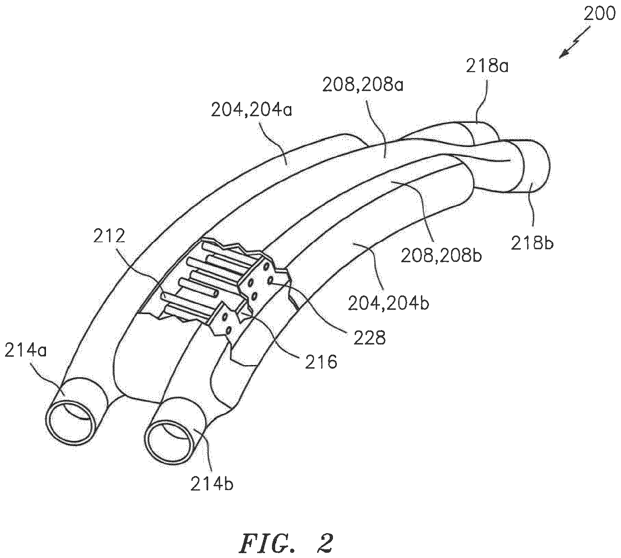

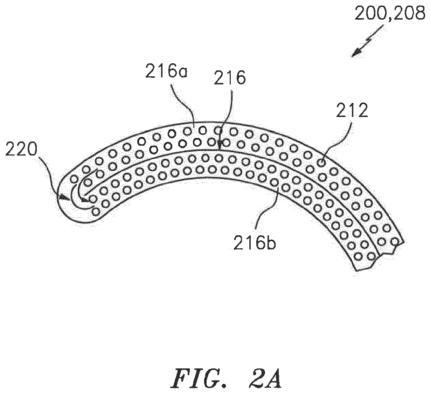

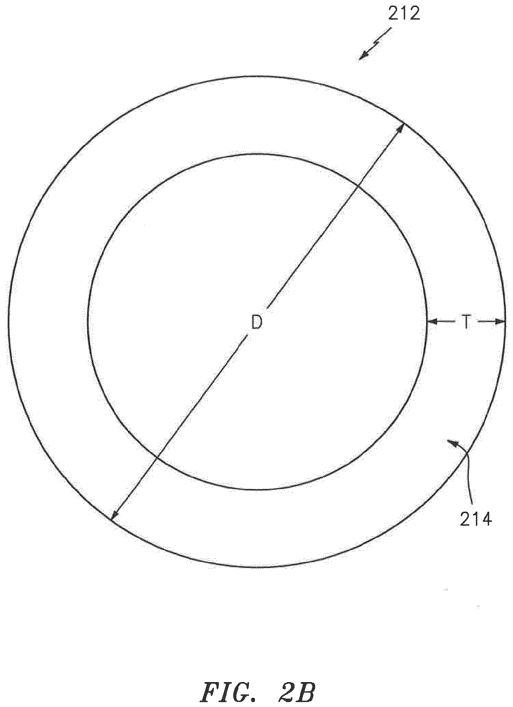

Referring to FIG. 2, a heat exchanger 200 is shown. The heat exchanger 200 may be deployed/installed at one or more locations of an engine (e.g., the engine 10 of FIG. 1). For example, the heat exchanger may be located in a bypass path/duct (e.g., the bypass gas path 40 of FIG. 1) or an airflow exhaust/exhaust duct (e.g., the airflow exhaust 16 of FIG. 1). In some embodiments, the heat exchanger 200 may be used as an intercooler between an LPC section (e.g., LPC section 19A of FIG. 1) and an HPC section (e.g., HPC section 19B of FIG. 1), such that fluid taken from the LPC section may be cooled prior to being introduced to the HPC section. In some embodiments, the heat exchanger 200 may be used as an intra-cooler by cooling fluid between stages of a common compressor section. In some embodiments, fluid taken from a compressor section (e.g., compressor section 19 of FIG. 1) may be cooled and supplied to a turbine section (e.g., turbine section 21 of FIG. 1); for example, the cooled fluid may be provided to the turbine section to cool blades of the turbine section.

The heat exchanger 200 includes two manifolds manifolds, such as for example a first manifold 204 and a second manifold 208. The first manifold 204 includes a first inlet feed manifold 204a and a first outlet feed manifold 204b. The second manifold 208 includes a second inlet feed manifold 208a and a second outlet feed manifold 208b. The terms inlet and outlet as used in this context are in relation to a direction of fluid flow in the respective manifold. For example, a fluid may enter a manifold at an inlet and exit the manifold at an outlet.

The manifolds 204 and 208 may include ports/connectors to facilitate/enable connecting the manifolds to a source or a destination of a fluid conveyed by the manifolds. For example, the first inlet feed manifold 204a may include a port 214a, the first outlet feed manifold 204b may include a port 214b, the second inlet feed manifold 208a may include a port 218a, and the second outlet feed manifold 208b may include a port 218b.

The first manifold 204 may be located outboard of the second manifold 208 as shown in FIG. 2. For example, the second inlet feed manifold 208a and the second outlet feed manifold 208b may be located between the first inlet feed manifold 204a and the first outlet feed manifold 204b as shown in FIG. 2. In this respect, the first manifold 204 may be referred to as an outboard manifold and the second manifold 208 may be referred to as an inboard manifold.

A portion of the housing/wall of the manifolds 204 and 208 is removed in FIG. 2 to reveal/illustrate internal features of the manifolds. In particular, as shown in FIG. 2 the heat exchanger 200 may include a plurality of tubes 212.

The tubes 212 may include hypotubes. Hypotubes may be available as commercial, off-the-shelf products. Referring to FIG. 2B, as used herein a hypotube is a tube as small as 0.005 inches (approximately 127 micrometers) in terms of an outer diameter D of the tube 212 (where the diameter D is measured relative to the center of the tube 212). In some embodiments, the diameter D may be a value between 0.03 inches (approximately 762 micrometers) and 0.3 inches (approximately 7,620 micrometers). The tubes 212 may have wall 214 thicknesses T as small as, e.g., 0.001 inches (approximately 25 micrometers). In some embodiments, the thickness T may be a value between 0.001 inches (approximately 25 micrometers) and 0.015 inches (approximately 381 micrometers).

As shown in FIGS. 2 and 2B, the tubes 212 may be round (e.g., circular) in cross-section. This use of round tubes may reduce (e.g., minimize or even completely avoid) a distortion of the wall 214 of the tube 212 when the heat exchanger 200 is in operational use. Other shapes/cross-sections may be used.

Referring to FIG. 2, the tubes 212 may fluidly connect the first inlet feed manifold 204a and the first outlet feed manifold 204b. An interior of the tubes 212 (e.g. the portion of a tube 212 inside the wall 214 - see FIG. 2B) may transfer/convey fluid from the first inlet feed manifold 204a to the first outlet feed manifold 204b. Fluid that enters the second inlet feed manifold 208a may be transferred/conveyed to the second outlet feed manifold 208b by flowing over the exterior walls/surfaces of the tubes 212 (e.g., outside/around the tube wall 214 - see FIG. 2B).

Referring to FIGS. 2 and 2A, the heat exchanger 200 (e.g., the second manifold 208) may include a splitter 216. The splitter 216 may define a first annulus 216a and a second annulus 216b. The splitter 216 may cause fluid of the second manifold 208 to flow over all, or substantially all of (e.g., at least 70% of), the tubes 212. In the absence of the splitter 216, the fluid of the second manifold 208 may be prone to a (localized) recirculation. By including the splitter 216, the fluid of the second manifold 208 may substantially traverse the entire length of the manifold 208, thereby promoting efficiency in heat transfer.

The heat exchanger 200 (e.g., the second manifold 208) may include one or more vanes, such as for example a vane 220. The vane 220 may cause fluid flowing in the first annulus 216a to change direction and flow in the second annulus 216b. For example, and assuming a right-to-left fluid flow in the first annulus 216a in FIG. 2A, the vane 220 may cause the fluid to flow in a left-to-right direction in the second annulus 216b in FIG. 2A. While an approximate one-hundred eighty-degree shift (e.g., 175 degrees to 185 degrees) may be accommodated by the vane 220 in terms of fluid flow direction, other values may be used/provided. For example, the angle may be selected to accommodate a flow of fluid out of the second outlet feed manifold 208b. In this respect, the angle provided by the vane 220 may be selected to conform to the orientation/geometry of an exit plane of the second outlet feed manifold 208b.

One or more of the components (e.g., the manifolds) described herein may be at least partially manufactured via additive manufacturing. Various additive manufacturing systems and techniques are known to skilled artisans. For example, U.S. patent application publication number 2016/0326880 describes and illustrates additive manufacturing systems and techniques. The contents of U.S. patent application publication number 2016/0326880 are incorporated herein by reference.

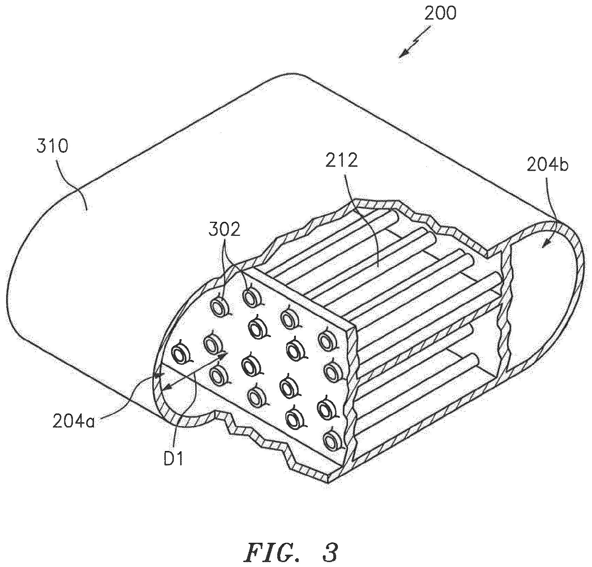

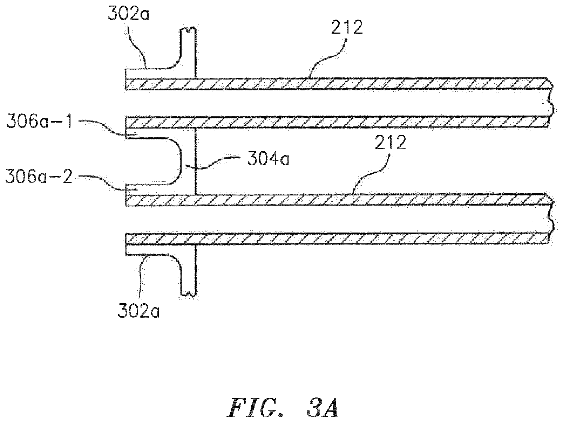

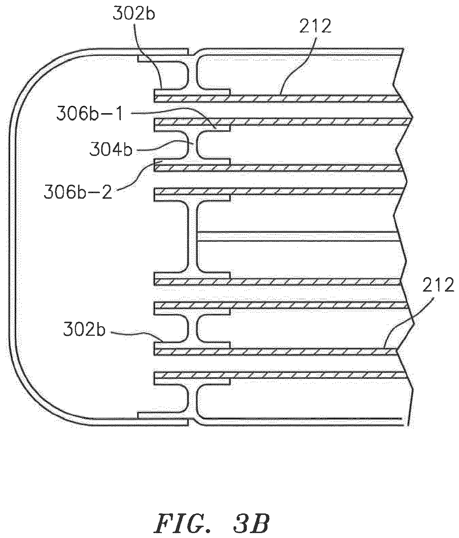

Use of an additive manufacturing technique may enable variable wall thicknesses and local form features such as bosses, fins, pins, and stiffening ribs to be incorporated. For example, FIG. 3 illustrates a plurality of bosses 302 that provide a high aspect ratio braze joint surface in a thin manifold wall. The bosses 302 may be provided at an interface between the tubes 212 and a housing/wall 310 of a manifold (e.g., manifold 204 - see FIG 2). A dimension (e.g., length) of a braze bond joint may be sized to ensure mechanical integrity and a leak proof joint. Additionally, features such as high-and-low point texturing and grooves (e.g., annular or helical grooves) may be grown into bore surfaces of boss holes to improve/enhance capillary action and wet out of the tube-to-manifold wall braze joint. A surface on the tubes 212 may have a similar treatment to provide a robust braze joint.

FIGS. 3A and 3B illustrate a plurality of bosses 302a and 302b, respectively. The bosses 302a and/or the bosses 302b may correspond to the bosses 302 of FIG. 3. A boss 302a and/or a boss 302b may be disposed between two tubes 212 as shown in FIGS. 3A and 3B, respectively.

As shown in FIG. 3B, flanges 306b-1 and 306b-2 of the bosses 302b may protrude in two (opposed) directions relative to a (central) boss beam/web 304b. The bosses 302b may be referred to as an I-beam; e.g., the beam 304b may separate flanges 306b-1 and 306b-2, and the beam 304b and the flanges 306b-1 and 306b-2 may collectively be shaped substantially as the letter "I". The bosses 302b may be referred to as dual-sided bosses in view of the projection of the flanges 306b-1 and 306b-2 in two direction as described above.

The bosses 302a may include a beam/web 304a that separates flanges 306a-1 and 306a-2 that protrude in a single direction (e.g., towards the wall 310 - see FIG. 3) relative to the beam 304a. The bosses 302a may be referred to as single-sided bosses in view of the projection of the flanges 306a-1 and 306a-2 in the single direction as described above.

Assuming all other conditions being equal, the single-sided bosses 302a may provide for an increased, effective tube 212 surface area relative to the dual-sided bosses 302b. In this respect, the single-sided bosses 302a may provide for increased efficiency in terms of heat transfer/exchange relative to the dual-sided bosses 302b. On the other hand, the dual-sided bosses 302b may provide for an increased braze surface area relative to the use of single-sided bosses 302a. As such, in embodiments where structural stability or leakage is a potential concern it may be advantageous to use dual-sided bosses 302b relative to single-sided bosses 302a.

Referring to FIG. 3, in some embodiments another parameter that may be varied may be a distance D1 between the wall 310 of the manifold and the bosses 302. For example, all other conditions being equal, decreasing the distance D1 may increase the length of the tubes 212 (thereby increasing the heat transfer capabilities of the heat exchanger 200). However, decreasing the distance D1 may tend to reduce the flow capacity of the associated manifold.

In view of the foregoing description based on FIGS. 3, 3A, and 3B, it is appreciated that a trade-off may be made in terms of one or more parameters (e.g., a boss geometry/profile, a separation/distance between a manifold wall and the bosses, etc.) to accommodate manifold flow capacity, heat transfer capability/efficiency, and structural integrity/leakage specifications/requirements. One or more finite element analyses and/or simulations may be performed to define an embodiment that satisfies such specifications/requirements.

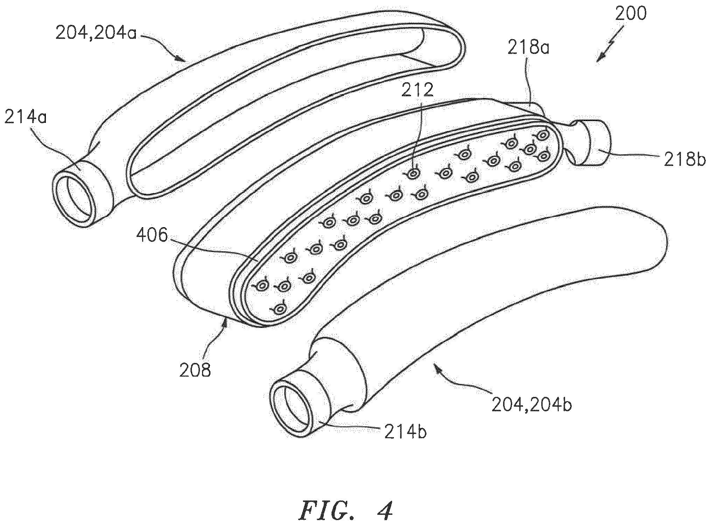

Fabrication of the heat exchanger 200 may be accomplished in several ways. For example, as shown in FIG. 4 a core assembly (e.g., the manifold 208 and the tubes 212) with exposed tube-to-manifold joints for brazing may be fabricated first, followed by attachment of additional manifold sections (e.g., the manifold 204). The additional manifold sections may be joined to the core assembly via industry-accepted processes, such as for example brazing, welding, bolting, riveting, or adhesive bonding. The core assembly section may include a step/ridge 406 to facilitate a lap joint (e.g., a brazed lap joint).

Additionally, with the use of a free form additive manufacturing process, a bond to the tubes 212 may be accomplished by directly depositing material on the tubes 212 during the fabrication of the core assembly. The surrounding manifold structure may be co-grown with the tubes 212 or may be added after a tube core assembly is complete, depending on the heat exchanger geometry and configuration.

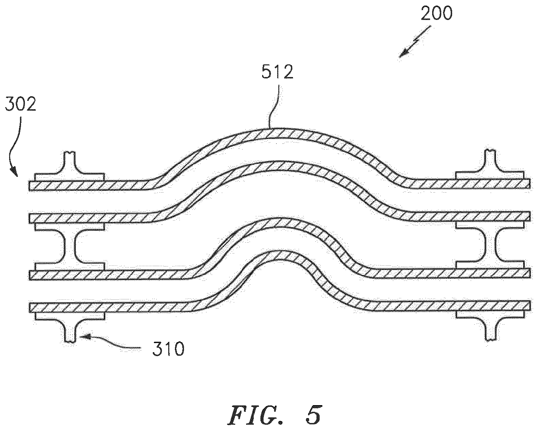

The heat exchanger 200 may experience large thermal gradients during engine start-up, operation, and shut down. Referring to FIG. 5, the tubes 212 may include one or more strain relief/compliance features 512, such as for example arcs/curves, u-bends, loops, large radius z-bends, helical spirals, etc. The strain relief features 512 may reduce (e.g., minimize) stress on the tubes 212 and the tube to manifold wall joints. Strain relief features may significantly increase the useful life of the heat exchanger 200.

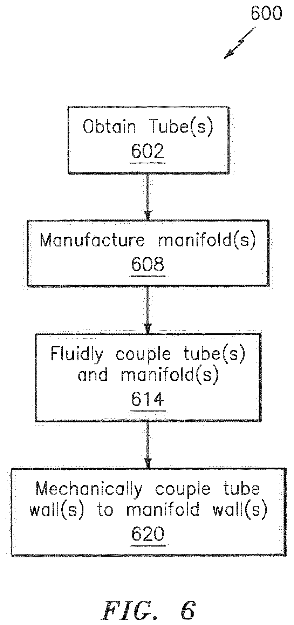

Referring now to FIG. 6, a flow chart of a method 600 for manufacturing/fabricating a heat exchanger is shown. The method 600 is described in conjunction with the components/devices described herein for the sake of convenience. One skilled in the art will appreciate, based on a review of this disclosure, that the method 600 may be adapted to accommodate other components/devices.

In block 602, one or more tubes 212 may be obtained. In block 602, the tubes 212 may be obtained as commercial, off-the-shelf products. In some embodiments, block 602 may include manufacturing the tubes 212. The tubes 212 may be manufactured via, e.g., extrusion, die drawing, roll forming, die casting, and/or grinding. In some embodiments, block 602 may include a modification/adjustment (e.g., a reduction) of a tube wall (e.g., wall 214) via, e.g., chemical etching.

In block 608, one or more manifolds (e.g., manifolds 204 and 208) may be manufactured. The manufacture of block 608 may include application of an additive manufacturing technique. The manufacture of block 608 may conform to one or more specifications/requirements. For example, the manufacture of block 608 may conform a profile of one or more walls (e.g., wall 310) of the manifold to a profile of a duct (e.g., exhaust duct 16, bypass duct 40) of an engine (e.g., engine 10).

In block 614, the tube(s) of block 602 may be fluidly coupled to at least one of the manifolds of block 608. For example, the tube(s) may be disposed within the walls of the manifold as shown in FIG. 2.

In block 620, tube wall(s) (e.g., wall 214) of the tube(s) of block 602 may be mechanically coupled to manifold wall(s) of block 608. The mechanical coupling of the block 620 may be facilitated via one or more bosses (e.g., bosses 302). The mechanical coupling of block 620 may include application of a brazing technique. In some embodiments, block 620 may include seating the tube(s) of block 602 in one or more slots (e.g., slots 228 of FIG. 2) formed in the manifold wall(s).

Aspects of the disclosure may combine the complex shape making capability of additive manufacturing for a manifold housing/wall with the low cost, thin walls, and robust mechanical properties of hypotubes. Aspects of the disclosure may provide efficient, durable, light weight, high temperature-capable heat exchangers suitable for use in gas turbine engine applications.

A heat exchanger of this disclosure may be manufactured to conform to one or more specifications/requirements. For example, a heat exchanger may be manufactured to conform to the shape/geometry of another component (e.g., a duct) where the heat exchanger is deployed/installed. In this respect, the heat exchanger may be referred to as a conformal heat exchanger.

While some of the embodiments described herein pertain to heat exchangers used in engine applications, aspects of the disclosure may be used in other application environments. For example, aspects of the disclosure (e.g., heat exchangers of this disclosure) may be used/applied in spacecraft electronics, computer systems, avionics systems, power generation, chemical processing, food processing, and heating, ventilation, and air conditioning (HVAC) applications.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A gas turbine engine comprising:
a compressor section;
a combustor section;
a turbine section; and
a heat exchanger (200), the heat exchanger (200) comprising:
a first additively manufactured manifold (204) that includes a first inlet feed manifold (204a) and a first outlet feed manifold (204b);
a second additively manufactured manifold (208) that includes a second inlet feed manifold (208a) and a second outlet feed manifold (208b); and
a plurality of tubes (212) fluidly connecting the first inlet feed manifold (204a) to the first outlet feed manifold (204b),
wherein the tubes (212) are round and/or circular in cross-section,
wherein each of the tubes (212) has a diameter that has a first value between 0.03 inches and 0.3 inches (762 micrometers and 7,620 micrometers),
wherein each of the tubes (212) has a wall thickness that has a second value between 0.001 inches and 0.015 inches (25 micrometers and 381 micrometers),
wherein the plurality of tubes (212) each include a wall,
wherein a first fluid is conveyed from the first inlet feed manifold (204a) to the first outlet feed manifold (204b) within an interior of the tubes (212), the interior defined relative to the wall of each of the tubes (212), and
wherein a second fluid is conveyed from the second inlet feed manifold (208a) to the second outlet feed manifold (208b) around an exterior of the tubes (212), the exterior defined relative to the wall of each of the tubes (212).

2. The gas turbine engine of claim 1, wherein the second inlet feed manifold (208a) and the second outlet feed manifold (208b) are located between the first inlet feed manifold (204a) and the first outlet feed manifold (204b), and wherein the second additively manufactured manifold (208) includes a ridge to facilitate a lap joint between the second additively manufactured manifold (208) and the first additively manufactured manifold (204).

3. The gas turbine engine of claim 1 or 2, further comprising:
a splitter (216) that defines a first annulus (216a) of the second additively manufactured manifold (208) and a second annulus (216b) of the second additively manufactured manifold,
wherein the splitter (216) causes a fluid conveyed by the second additively manufactured manifold (206) to flow around at least seventy percent of the tubes (212).

4. The gas turbine engine of claim 3, further comprising:
a vane (220) that causes the fluid conveyed by the second additively manufactured manifold (208) to change direction in terms of flow between the first annulus (216a) and the second annulus (216b).

5. The gas turbine engine of claim 4, wherein the change in direction is between 175 degrees and 185 degrees.

6. The gas turbine engine of any preceding claim, further comprising:
a plurality of bosses (302b) that mechanically couple the tubes (212) and a wall (310) of the first additively manufactured manifold (204).

7. The gas turbine engine of claim 6, wherein at least one of the bosses (302b) is a single-sided boss.

8. The gas turbine engine of claim 6 or 7, wherein at least one of the bosses (302b) is a dual-sided boss.

9. The gas turbine engine of any preceding claim, wherein at least one of the tubes (212) includes a strain relief feature.

10. The gas turbine engine of any preceding claim, wherein the compressor section (19) includes a low pressure compressor section (LPC) and a high pressure compressor section (HPC), and wherein the heat exchanger (200) is an intercooler between the low pressure compressor section and the high pressure compressor section.

11. The gas turbine engine of any preceding claim, wherein the compressor section (19) includes a plurality of sections, and wherein the heat exchanger (200) cools the first fluid between stages of one of the plurality of sections.

12. The gas turbine engine of any preceding claim, wherein the first inlet feed manifold (204a) receives the first fluid from the compressor section (19), and wherein the first outlet feed manifold (204b) provides the first fluid to the turbine section (21) to cool a blade of the turbine section (21).

13. The gas turbine engine of any preceding claim, further comprising:
an exhaust duct, wherein the heat exchanger (200) is located in the exhaust duct.

14. The gas turbine engine of any preceding claim, further comprising:
a bypass duct (40) that conveys air that bypasses the compressor section (19), the combustor section (20), and the turbine section (21),
wherein the heat exchanger (200) is located in the bypass duct (40), and
wherein the first fluid includes a portion of the air.

15. A method of fabricating a heat exchanger (200) for a gas turbine engine according to claim 1, comprising:
additively manufacturing the first manifold (204), wherein the first manifold (204) further comprises a manifold wall and a profile of the manifold wall conforms to a profile of a duct of a gas turbine engine;
fluidly coupling the tubes (212) and the manifold (204); and
mechanically coupling the tube wall of each of the tubes (212) to the manifold wall via a respective boss (302b) using at least a brazing technique.

## Patentansprüche

1. Gasturbinentriebwerk, das Folgendes umfasst:
einen Verdichterabschnitt;
einen Brennkammerabschnitt;
einen Turbinenabschnitt; und
einen Wärmetauscher (200), wobei der Wärmetauscher (200) Folgendes umfasst:
einen ersten generativ gefertigten Verteiler (204), der einen ersten Einlasszufuhrverteiler (204a) und einen ersten Auslasszufuhrverteiler (204b) beinhaltet;
einen zweiten generativ gefertigten Verteiler (208), der einen zweiten Einlasszufuhrverteiler (208a) und einen zweiten Auslasszufuhrverteiler (208b) beinhaltet; und
eine Vielzahl von Rohren (212), die den ersten Einlasszufuhrverteiler (204a) mit dem ersten Auslasszufuhrverteiler (204b) fluidisch verbinden;
wobei die Rohre (212) einen runden und/oder kreisförmigen Querschnitt aufweisen,
wobei jedes der Rohre (212) einen Durchmesser aufweist, der einen ersten Wert zwischen 0,03 Zoll und 0,3 Zoll (762 Mikrometer und 7.620 Mikrometer) aufweist,
wobei jedes der Rohre (212) eine Wandstärke aufweist, die einen zweiten Wert zwischen 0,001 Zoll und 0,015 Zoll (25 Mikrometer und 381 Mikrometer) aufweist,
wobei die Vielzahl von Rohren (212) jeweils eine Wand beinhaltet,
wobei ein erstes Fluid von dem ersten Einlasszufuhrverteiler (204a) zu dem ersten Auslasszufuhrverteiler (204b) innerhalb eines Innenren der Rohre (212) befördert wird, wobei das Innere relativ zur Wand jedes der Rohre (212) definiert ist, und
wobei ein zweites Fluid von dem zweiten Einlasszufuhrverteiler (208a) zu dem zweiten Auslasszufuhrverteiler (208b) um eine Außenseite der Rohre (212) herum befördert wird, wobei die Außenseite relativ zur Wand jedes der Rohre (212) definiert ist.

2. Gasturbinentriebwerk nach Anspruch 1, wobei sich der zweite Einlasszufuhrverteiler (208a) und der zweite Auslasszufuhrverteiler (208b) zwischen dem ersten Einlasszufuhrverteiler (204a) und dem ersten Auslasszufuhrverteiler (204b) befinden und wobei der zweite generativ gefertigte Verteiler (208) eine Rippe beinhaltet, um eine Überlappungsverbindung zwischen dem zweiten generativ gefertigten Verteiler (208) und dem ersten generativ gefertigten Verteiler (204) zu ermöglichen.

3. Gasturbinentriebwerk nach Anspruch 1 oder 2, das ferner Folgendes umfasst:
einen Strömungsteiler (216), der einen ersten Strömungskanal (216a) des zweiten generativ gefertigten Verteilers (208) und
einen zweiten Strömungskanal (216b) des zweiten generativ gefertigten Verteilers definiert;
wobei der Strömungsteiler (216) bewirkt, dass eine Flüssigkeit, die durch den zweiten generativ gefertigten Verteiler (206) befördert wird, um mindestens siebzig Prozent der Rohre (212) herum strömt.

4. Gasturbinentriebwerk nach Anspruch 3, das ferner Folgendes umfasst:
eine Leiteinrichtung (220), die bewirkt, dass das von dem zweiten generativ gefertigten Verteiler (208) beförderte Fluid die Strömungsrichtung zwischen dem ersten Strömungskanal (216a) und dem zweiten Strömungskanal (216b) ändert.

5. Gasturbinentriebwerk nach Anspruch 4, wobei die Richtungsänderung zwischen 175 Grad und 185 Grad liegt.

6. Gasturbinentriebwerk nach einem der vorhergehenden Ansprüche, das ferner Folgendes umfasst:
eine Vielzahl von Vorsprüngen (302b), die die Rohre (212) und
eine Wand (310) des ersten generativ gefertigten Verteilers (204) mechanisch koppeln.

7. Gasturbinentriebwerk nach Anspruch 6, wobei mindestens einer der Vorsprünge (302b) ein einseitiger Vorsprung ist.

8. Gasturbinentriebwerk nach Anspruch 6 oder 7, wobei mindestens einer der Vorsprünge (302b) ein zweiseitiger Vorsprung ist.

9. Gasturbinentriebwerk nach einem der vorhergehenden Ansprüche, wobei mindestens eines der Rohre (212) ein Zugentlastungsmerkmal aufweist.

10. Gasturbinentriebwerk nach einem der vorhergehenden Ansprüche, wobei der Verdichterabschnitt (19) einen Niederdruckverdichterabschnitt (low pressure compressor - LPC) und einen Hochdruckkverdichterabschnitt (high pressure compressor - HPC) beinhaltet und wobei der Wärmetauscher (200) ein Zwischenkühler zwischen dem Niederdruckverdichterabschnitt und dem Hochdruckverdichterabschnitt ist.

11. Gasturbinentriebwerk nach einem der vorhergehenden Ansprüche, wobei der Verdichterabschnitt (19) eine Vielzahl von Abschnitten beinhaltet und wobei der Wärmetauscher (200) das erste Fluid zwischen Stufen einer der Vielzahl von Abschnitten kühlt.

12. Gasturbinentriebwerk nach einem der vorhergehenden Ansprüche, wobei der erste Einlasszufuhrverteiler (204a) das erste Fluid von dem Verdichterabschnitt (19) aufnimmt und wobei der erste Auslasszufuhrverteiler (204b) das erste Fluid dem Turbinenabschnitt (21) zuführt, um eine Schaufel des Turbinenabschnitts (21) zu kühlen.

13. Gasturbinentriebwerk nach einem der vorhergehenden Ansprüche, das ferner Folgendes umfasst:
einen Abgaskanal, wobei sich der Wärmetauscher (200) in dem Abgaskanal befindet.

14. Gasturbinentriebwerk nach einem der vorhergehenden Ansprüche, das ferner Folgendes umfasst:
einen Umgehungskanal (40), der Luft befördert, die den Verdichterabschnitt (19), den Brennkammerabschnitt (20) und den Turbinenabschnitt (21) umgeht;
wobei sich der Wärmetauscher (200) in dem Umgehungskanal (40) befindet, und
wobei das erste Fluid einen Teil der Luft beinhaltet.

15. Verfahren zum Fertigen eines Wärmetauschers (200) für ein Gasturbinentriebwerk nach Anspruch 1, das Folgendes umfasst:
generatives Fertigen des ersten Verteilers (204), wobei der erste Verteiler (204) ferner eine Verteilerwand umfasst und ein Profil der Verteilerwand einem Profil eines Kanals eines Gasturbinentriebwerks entspricht; fluidisches Kuppeln der Rohre (212) und des Verteilers (204); und
mechanisches Kuppeln der Rohrwand jedes der Rohre (212) mit der Verteilerwand über einen entsprechende Vorsprung (302b) unter Verwendung mindestens einer Löttechnik.

## Revendications

1. Moteur de turbine à gaz comprenant :
une section de compresseur ;
une section de chambre de combustion ;
une section de turbine ; et
un échangeur de chaleur (200), l'échangeur de chaleur (200) comprenant :
un premier collecteur fabriqué de manière additive (204) qui comporte un premier collecteur d'alimentation d'entrée (204a) et un premier collecteur d'alimentation de sortie (204b) ;
un second collecteur fabriqué de manière additive (208) qui comporte un second collecteur d'alimentation d'entrée (208a) et un second collecteur d'alimentation de sortie (208b) ; et
une pluralité de tubes (212) reliant fluidiquement le premier collecteur d'alimentation d'entrée (204a) au premier collecteur d'alimentation de sortie (204b),
dans lequel les tubes (212) ont une section transversale ronde et/ou circulaire,
dans lequel chacun des tubes (212) a un diamètre qui a une première valeur comprise entre 0,03 pouce et 0,3 pouce (entre 762 micromètres et 7 620 micromètres),
dans lequel chacun des tubes (212) a une épaisseur de paroi qui a une seconde valeur comprise entre 0,001 pouce et 0,015 pouce (25 micromètres et 381 micromètres),
dans lequel la pluralité de tubes (212) comportent chacun une paroi,
dans lequel un premier fluide est acheminé du premier collecteur d'alimentation d'entrée (204a) au premier collecteur d'alimentation de sortie (204b) dans un intérieur des tubes (212), l'intérieur étant défini par rapport à la paroi de chacun des tubes (212), et
dans lequel un second fluide est acheminé du second collecteur d'alimentation d'entrée (208a) au second collecteur d'alimentation de sortie (208b) autour d'un extérieur des tubes (212), l'extérieur étant défini par rapport à la paroi de chacun des tubes (212).

2. Moteur de turbine à gaz selon la revendication 1, dans lequel le second collecteur d'alimentation d'entrée (208a) et le second collecteur d'alimentation de sortie (208b) sont situés entre le premier collecteur d'alimentation d'entrée (204a) et le premier collecteur d'alimentation de sortie (204b), et dans lequel le second collecteur fabriqué de manière additive (208) comporte une arête pour faciliter l'installation d'un joint à recouvrement entre le second collecteur fabriqué de manière additive (208) et le premier collecteur fabriqué de manière additive (204).

3. Moteur de turbine à gaz selon la revendication 1 ou 2, comprenant en outre :
un séparateur (216) qui définit un premier anneau (216a) du second collecteur fabriqué de manière additive (208) et un second anneau (216b) du second collecteur fabriqué de manière additive,
dans lequel le séparateur (216) amène un fluide acheminé par le second collecteur fabriqué de manière additive (206) à s'écouler autour d'au moins soixante-dix pour cent des tubes (212).

4. Moteur de turbine à gaz selon la revendication 3, comprenant en outre :
une aube (220) qui amène le fluide acheminé par le second collecteur fabriqué de manière additive (208) à changer de direction en matière d'écoulement entre le premier anneau (216a) et le second anneau (216b).

5. Moteur de turbine à gaz selon la revendication 4, dans lequel le changement de direction est compris entre 175 degrés et 185 degrés.

6. Moteur de turbine à gaz selon une quelconque revendication précédente, comprenant en outre :
une pluralité de bossages (302b) qui couplent mécaniquement les tubes (212) et une paroi (310) du premier collecteur fabriqué de manière additive (204).

7. Moteur de turbine à gaz selon la revendication 6, dans lequel au moins un des bossages (302b) est un bossage à un seul côté.

8. Moteur de turbine à gaz selon la revendication 6 ou 7, dans lequel au moins un des bossages (302b) est un bossage à deux côtés.

9. Moteur de turbine à gaz selon une quelconque revendication précédente, dans lequel au moins un des tubes (212) comporte un élément détendeur.

10. Moteur de turbine à gaz selon une quelconque revendication précédente, dans lequel la section de compresseur (19) comporte une section de compresseur basse pression (LPC) et une section de compresseur haute pression (HPC), et dans lequel l'échangeur de chaleur (200) est un refroidisseur intermédiaire entre la section de compresseur basse pression et la section de compresseur haute pression.

11. Moteur de turbine à gaz selon une quelconque revendication précédente, dans lequel la section de compresseur (19) comporte une pluralité de sections, et dans lequel l'échangeur de chaleur (200) refroidit le premier fluide entre des étages d'une section parmi la pluralité de sections.

12. Moteur de turbine à gaz selon une quelconque revendication précédente, dans lequel le premier collecteur d'alimentation d'entrée (204a) reçoit le premier fluide de la section de compresseur (19), et dans lequel le premier collecteur d'alimentation de sortie (204b) fournit le premier fluide à la section de turbine (21) pour refroidir une aube de la section turbine (21).

13. Moteur de turbine à gaz selon une quelconque revendication précédente, comprenant en outre :
un conduit d'échappement, dans lequel l'échangeur de chaleur (200) est situé dans le conduit d'échappement.

14. Moteur de turbine à gaz selon une quelconque revendication précédente, comprenant en outre :
un conduit de dérivation (40) qui achemine de l'air qui contourne la section de compresseur (19), la section de chambre de combustion (20) et la section de turbine (21),
dans lequel l'échangeur de chaleur (200) est situé dans le conduit de dérivation (40), et
dans lequel le premier fluide comporte une partie de l'air.

15. Procédé de fabrication d'un échangeur de chaleur (200) pour un moteur de turbine à gaz selon la revendication 1, comprenant :
la fabrication additive du premier collecteur (204), dans lequel le premier collecteur (204) comprend en outre une paroi de collecteur et un profil de la paroi de collecteur épouse un profil d'un conduit d'un moteur de turbine à gaz ; le couplage fluidique des tubes (212) et du collecteur (204) ; et
le couplage mécanique de la paroi de tube de chacun des tubes (212) à la paroi de collecteur via un bossage respectif (302b) à l'aide d'au moins une technique de brasage.
